# EUROPEAN PATENT APPLICATION

(11) **EP 3 222 394 A2**
(43) Date of publication of application: **27.09.2017**
(21) Application number: 17162546.0
(22) Date of filing: 23.03.2017
(51) Int. Cl.: B25J 19/02, B25J 19/06, B25J 13/08

(54) **ROBOT AND EXTERNAL-FORCE DETECTING DEVICE**

(30) Priority: 25.03.2016 JP 2016062309; 25.03.2016 JP 2016062310
(71) Applicant: Seiko Epson Corporation, Tokyo 160-8801 (JP)
(72) Inventor: Takeuchi, Junichi, Nagano, 392-8502 (JP)
(74) Representative: Hoffmann Eitle

(57) **Abstract**

A robot (1) includes a movable section (234), a first member (31) disposed in the movable section (234), a second member (32) configured to form a space (S) between the second member (32) and the first member (31), a third member (33) located between the first member (31) and the second member (32) and configured to restrain displacement of the second member (32) in a direction separating from the first member (31), and a pressure detecting section (34) configured to detect pressure in the space (S).

## Description

### BACKGROUND

### 1. Technical Field

The present invention relates to a robot and an external-force detecting device.

### 2. Related Art

For example, as a robot used in a manufacturing process for manufacturing an industrial product, a robot described in JP-A-63-39786 (Patent Literature 1) is known. The robot described in Patent Literature 1 includes a plurality of arms connected via joints and a hand attached to the arm located at the most distal end. The robot includes a mechanism that can detect contact with an operator. The mechanism is disposed in the arm located at the most distal end and includes a mat, on the inside of which a belt-like air chamber is formed, and a pressure switch that detects the pressure in the mat. When the pressure switch detects the pressure in the mat that changes according to the contact with the operator, the robot safely stops.

However, in the robot described in Patent Literature 1, when the operator (a contact object) comes into contact with the mat, a contact portion of the mat with the operator recesses and a portion other than the contact portion swells. As a result, a pressure change in the mat less easily occurs. Therefore, the contact with the operator cannot be highly accurately detected.

### SUMMARY

An advantage of some aspects of the invention is to solve at least a part of the problems described above, and the invention can be implemented as the following forms or application examples.

A robot according to an aspect of the invention includes : a movable section; a first member disposed in the movable section; a second member conf igured to form a space between the second member and the first member; a third member located between the first member and the second member and configured to restrain displacement of the second member in a direction separating from the first member; and a pressure detecting section configured to detect pressure in the space.

Since the displacement of the second member in the direction separating from the first member is restrained by the third member, when a contact object (representatively, an operator) comes into contact with the second member, a portion other than a contact portion of the second member with the contact object less easily swells. It is possible to increase a pressure change in the space. Therefore, the robot can highly sensitively detect the contact with the contact object.

In the robot according to the aspect, it is preferable that the space is surrounded by the first member and the second member.

With this configuration, it is possible to relatively easily form the space.

In the robot according to the aspect, it is preferable that the space is sealed.

With this configuration, the pressure in the space easily changes according to the contact with the contact object. The pressure instantaneously changes in response to the contact with the contact object. Therefore, it is possible to more highly sensitively detect the pressure change in the space.

In the robot according to the aspect, it is preferable that the space has positive pressure in a natural state.

With this configuration, the pressure in the space easily changes according to the contact with the contact object. If the contact with the contact object is released, the pressure in the space can quickly return to the natural state.

In the robot according to the aspect, it is preferable that the space is partitioned into a plurality of spaces.

With this configuration, one space can be reduced in size. Therefore, the pressure change due to the contact with the contact object increases.

In the robot according to the aspect, it is preferable that the pressure detecting section is disposed in the second member.

With this configuration, the pressure detecting section can be disposed in a place nearer from the space. Therefore, it is possible to more accurately detect the pressure in the space.

In the robot according to the aspect, it is preferable that the pressure detecting section is disposed in the first member.

With this configuration, the pressure detecting section can be disposed in a place nearer from the space. Therefore, it is possible to more accurately detect the pressure in the space.

In the robot according to the aspect, it is preferable that a part of the movable section also functions as the first member.

With this configuration, it is possible to simplify an apparatus configuration.

In the robot according to the aspect, it is preferable that the third member is an elastic body.

With this configuration, the configuration of the third member is simplified. It is possible to reduce a shock at the time of the contact with the contact object.

In the robot according to the aspect, it is preferable that the third member includes a foamed body.

With this configuration, the configuration of the third member is simplified.

In the robot according to the aspect, the first member can for example be a first sheet material disposed in a housing of the movable section.

The second member can for example be a second sheet material configured to form a space surrounded between the second sheet material and the first sheet material.

The third member can for example be a displacement restraining section located between the first sheet material and the second sheet material and configured to restrain displacement of the second sheet material in a direction separating from the first sheet material.

In the robot according to the aspect, it is preferable that the third member is fixed to the first member and the second member, a plurality of fixed portions of the third member and the first member are provided to be separated from one another, and a plurality of fixed portions of the third member and the second member are provided to be separated from one another.

With this configuration, in particular, deformation of the second member is less easily hindered by the third member. Therefore, it is possible to reduce breakage of the second member.

An external-force detecting device according to another aspect of the invention includes: a first member; a second member configured to form a space between the second member and the first member; a third member located between the first member and the second member and configured to restrain displacement of the second member in a direction separating from the first member; and a pressure detecting section configured to detect pressure in the space.

Since the displacement of the second member in the direction separating from the first member is restrained by the third member, when a contact object comes into contact with the second member, a portion other than a contact portion of the second member with the contact object less easily swells. It is possible to increase a pressure change in the space. Therefore, the external-force detecting device can highly sensitively detect the contact with the contact object.

A robot according to still another aspect of the invention includes: a movable section; a first member disposed in the movable section; a second member configured to form a space between the second member and the first member; a third member located between the first member and the second member and configured to restrain displacement of the second member in a direction separating from the first member; a pressure detecting section configured to detect pressure in the space; and an opening section configured to cause an inside and an outside of the space to communicate.

With this configuration, the displacement of the second member in the direction separating from the first member can be restrained by the third member. Therefore, when a contact object (representatively, an operator) comes into contact with the second member, a portion other than a contact portion of the second member with the contact object less easily swells. A pressure change in the space due to the contact increases. If the contact with the contact object is released, the pressure in the space can quickly return to a natural state with the third member. Therefore, the robot can highly sensitively detect the contact with the contact object.

In the robot according to the aspect, it is preferable that the third member is fixed to the first member.

With this configuration, the displacement of the second member in the direction separating from the first member can be more effectively restrained by the third member.

In the robot according to the aspect, it is preferable that a part of the movable section also functions as the first member.

With this configuration, it is possible to simplify an apparatus configuration.

In the robot according to the aspect, it is preferable that a plurality of fixed portions of the third member and the second member are provided.

With this configuration, since the deformation of the second member is less easily hindered by the third member, it is possible to reduce breakage of the second member.

In the robot according to the aspect, it is preferable that width of the opening section is within a range of 0.1 mm or more and 2 mm or less.

With this configuration, a pressure change in the space due to the contact with the contact object can be set relatively large. It is possible to more highly accurately detect presence or absence of the contact with the contact object.

In the robot according to the aspect, it is preferable that the opening section can change an opening area.

With this configuration, it is possible to adjust a state of the pressure change in the space due to the contact with the contact object.

An external-force detecting device according to still another aspect of the invention includes: a first member; a second member configured to form a space between the second member and the first member; a third member located between the first member and the second member and configured to restrain displacement of the second member in a direction separating from the first member; a pressure detecting section configured to detect pressure in the space, and an opening section configured to cause an inside and an outside of the space to communicate.

With this configuration, the displacement of the second member in the direction separating from the first member can be restrained by the third member. Therefore, when a contact object (representatively, an operator) comes into contact with the second member, a portion other than a contact portion of the second member with the contact object less easily swells. A pressure change in the space due to the contact increases. If the contact with the contact object is released, the pressure in the space can quickly return to a natural state with the third member. Therefore, the external-force detecting device can highly sensitively detect the contact with the contact object.

### BRIEF DESCRIPTION OF THE DRAWINGS

The invention will be described with reference to the accompanying drawings, wherein like numbers reference like elements.
Fig. 1 is a perspective view showing a robot according to first and seventh embodiments of the invention.
Fig. 2 is a sectional view showing an external-force detecting device included in the robot shown in Fig. 1.
Fig. 3 is a sectional view showing a state in which a contact object comes into contact with the external-force detecting device shown in Fig. 2.
Fig. 4 is a graph showing an example of a detection signal of a pressure sensor included in the external-force detecting device.
Fig. 5 is a partially enlarged sectional view showing a robot according to a second embodiment of the invention.
Fig. 6 is a partially enlarged sectional view showing a robot according to a third embodiment of the invention.
Fig. 7 is a partially enlarged sectional view showing a robot according to a fourth embodiment of the invention.
Fig. 8 is a partially enlarged sectional view showing a robot according to a fifth embodiment of the invention.
Fig. 9 is a partially enlarged sectional view showing a robot according to a sixth embodiment of the invention.
Fig. 10 is a sectional view showing an external-force detecting device included in the robot shown in Fig. 1.
Fig. 11 is a sectional view showing a state in which a contact object comes into contact with the external-force detecting device shown in Fig. 10.
Fig. 12 is a sectional view showing a modification of the external-force detecting device shown in Fig. 10.
Fig. 13 is a graph showing an example of a detection signal of a pressure sensor included in the external-force detecting device.
Fig. 14 is a partially enlarged sectional view showing a robot according to an eighth embodiment of the invention.
Fig. 15 is a partially enlarged sectional view showing a robot according to a ninth embodiment of the invention.
Fig. 16 is a partially enlarged sectional view showing a robot according to a tenth embodiment of the invention.
Fig. 17 is a partially enlarged sectional view showing a robot according to an eleventh embodiment of the invention.

### DESCRIPTION OF EXEMPLARY EMBODIMENTS

A robot and an external-force detecting device according to the invention are explained in detail below on the basis of preferred embodiments shown in the accompanying drawings.

### First Embodiment

A robot according to a first embodiment of the invention is explained.

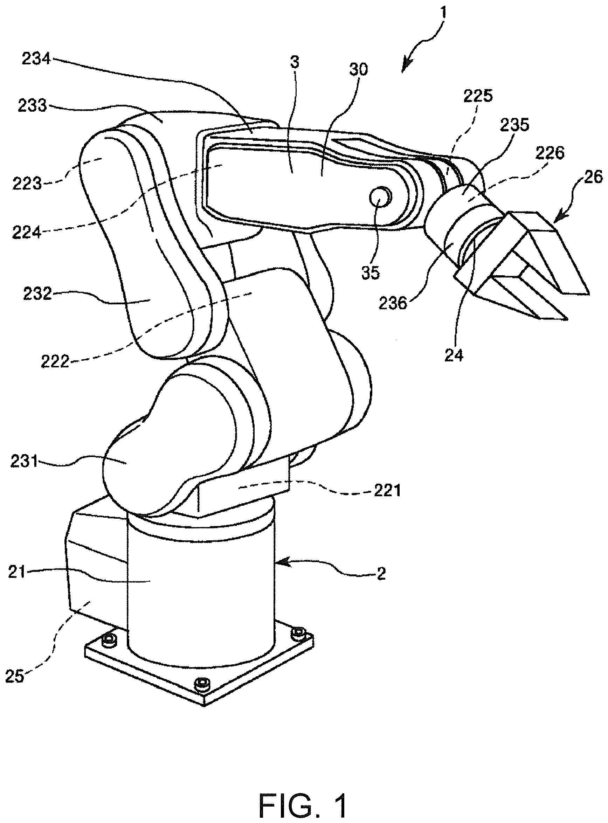

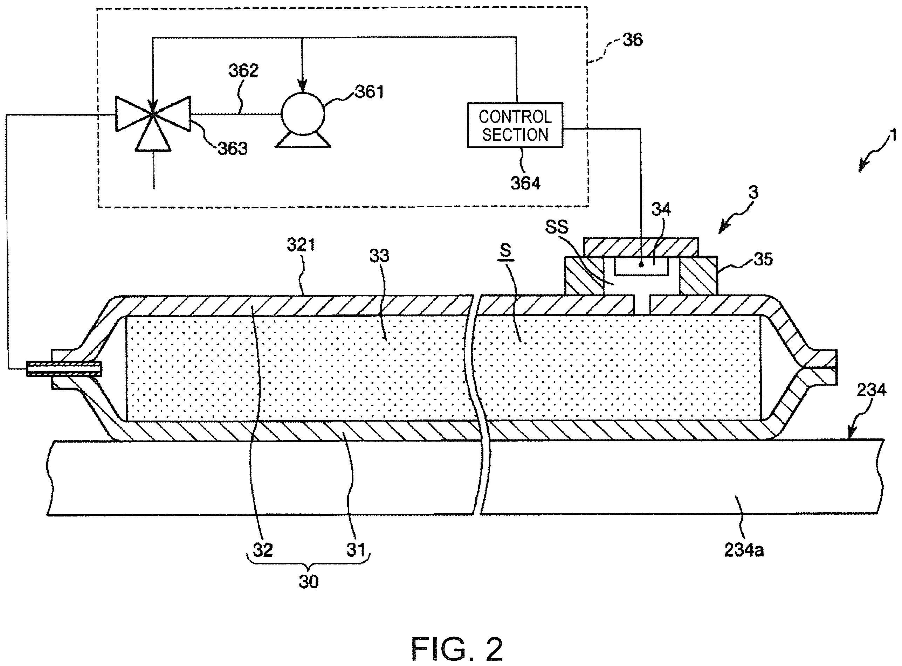

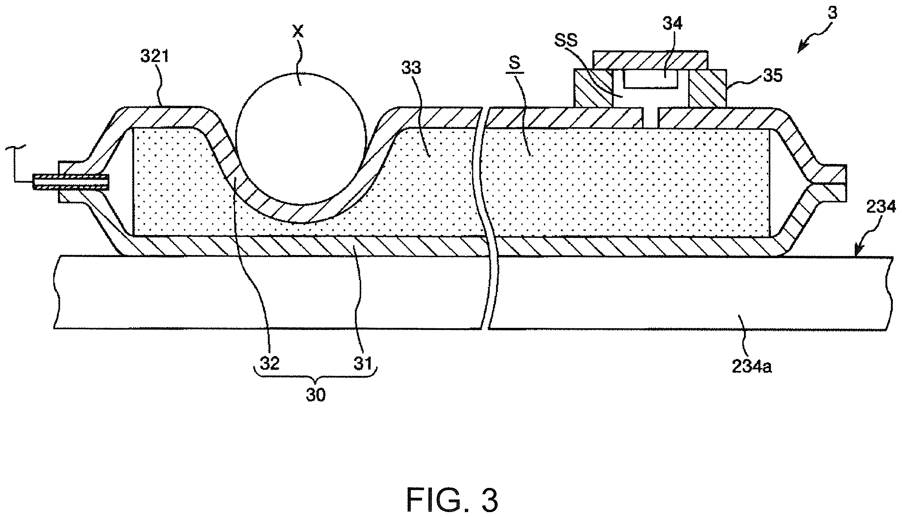

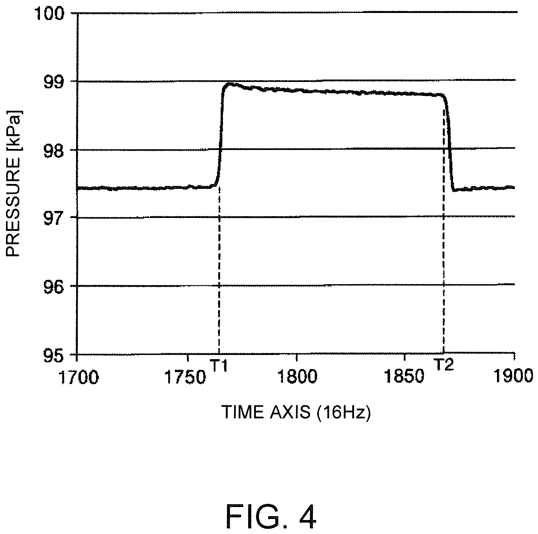

Fig. 1 is a perspective view showing a robot according to this embodiment. Fig. 2 is a sectional view showing an external-force detecting device included in the robot shown in Fig. 1. Fig. 3 is a sectional view showing a state in which a contact object comes into contact with the external-force detecting device shown in Fig. 2. Fig. 4 is a graph showing an example of a detection signal of a pressure sensor included in the external-force detecting device.

A robot 1 shown in Fig. 1 is a robot that can be used in a manufacturing process for manufacturing an industrial product such as a precision instrument. As shown in the figure, the robot 1 includes a robot main body 2 including a plurality of arms 231, 232, 233, 234, 235, and 236 functioning as movable sections and an external-force detecting device 3 disposed in the robot main body 2. As shown in Fig. 2, the external-force detecting device 3 includes a first sheet material 31 functioning as a first member disposed in a housing 234a of the arm 234, a second sheet material 32 functioning as a second member configured to form a space S, which is a space surrounded between the second sheet material 32 and the first sheet material 31, in conjunction with the first sheet material 31, a displacement restraining section 33 functioning as a third member located between the first sheet material 31 and the second sheet material 32 and configured to restrain displacement of the sheet material 32 in a direction separating from the first sheet material 31, a pressure sensor 34 functioning as a pressure detecting section configured to detect the pressure in the space S, and a pressure control unit 36 configured to control the pressure in the space S. With the external-force detecting device 3, the displacement of the second sheet material 32 in the direction separating from the first sheet material 31 can be restrained by displacement restraining section 33. Therefore, when a contact object X (representatively, an operator) comes into contact with the second sheet material 32 (the arm 234), as shown in Fig. 3, a portion other than a contact portion of the second sheet material 32 with the contact object X less easily swells. It is possible to increase a pressure change in the space S. Therefore, it is possible to highly sensitively detect the contact with the contact object X and perform safe driving of the robot 1. Note that " restrain the displacement" includes reducing a displacement amount even if the displacement is not completely suppressed.

The robot 1 is explained in detail below.

The robot main body 2 includes a base 21 fixed to, for example, a floor or a ceiling, the arm 231 coupled to the base 21 via a joint mechanism 221 and configured to turn with the joint mechanism 221 as an axis, the arm 232 coupled to the arm 231 via a joint mechanism 222 and configured to turn with the joint mechanism 222 as an axis, the arm 233 coupled to the distal end of the arm 232 via a joint mechanism 223 and configured to turn with the joint mechanism 223 as an axis, the arm 234 coupled to the distal end of the arm 233 via a joint mechanism 224 and configured to turn with the joint mechanism 224 as an axis, the arm 235 coupled to the distal end of the arm 234 via a joint mechanism 225 and configured to turn with the joint mechanism 225 as an axis, and the arm 236 coupled to the distal end of the arm 235 via a joint mechanism 226 and configured to turn with the joint mechanism 226 as an axis. A hand connecting section 24 is provided in the arm 236. A hand 26 (an end effector) corresponding to work, which the operator causes the robot 1 to execute, is attached to the hand connecting section 24.

Driving of the turning of the arms 231, 232, 233, 234, 235, and 236 is performed by motors or the like incorporated in the joint mechanisms 221, 222, 223, 224, 225, and 226. Driving of the motors is controlled by a robot control section 25. Consequently, it is possible to cause the robot 1 to execute desired operation.

As shown in Fig. 2, the external-force detecting device 3 includes the first sheet material 31, the second sheet material 32 configured to form the space S between the second sheet material 32 and the first sheet material 31 (in other words, provided spaced apart from the first sheet material 31 by the space S), the displacement restraining section 33 located between the first sheet material 31 and the second sheet material 32, the pressure sensor 34 configured to detect the pressure in the space S, and the pressure control unit 36 configured to control the pressure in the space S. The first sheet material 31 is disposed on the surface of the housing 234a of the arm 234. A surface 321 of the second sheet material 32 is formed as a contact surface with the contact object X. That is, the second sheet material 32 is disposed on the opposite side of the arm 234 with respect to the first sheet material 31.

Note that the disposition of the external-force detecting device 3 is not particularly limited as long as the external-force detecting device 3 is disposed in a moving portion (i.e., a movable section). The external-force detecting device 3 only has to be disposed in at least one of the arms 231, 232, 233, 234, 235, and 236. However, when the external-force detecting device 3 is disposed in a plurality of arms, it is desirable to dispose an independent space S for each of the arms without disposing the space S across joint mechanisms.

The first sheet material 31 and the second sheet material 32 are respectively members formed in a sheet shape and having airtightness and flexibility. The first sheet material 31 and the second sheet material 32 are joined by outer edge portions. A bag body 30 including the space S is formed on the inner side of the first sheet material 31 and the second sheet material 32. However, the first sheet material 31 may be formed of a rigid member. The first sheet material 31 and the second sheet material 32 may be integrated. That is, for example, the bag body 30 may be formed by folding one sheet into two and joining outer edges of two folded pieces.

The space S is surrounded and sealed (i.e. , hermetically sealed) by the first sheet material 31 and the second sheet material 32. Since the space S is sealed in this way, the pressure in the space S easily changes according to the contact with the contact object X. Since the pressure in the space S instantaneously changes in response to the contact with the contact object X. Therefore, it is possible to more highly sensitively detect the pressure change in the space S (i.e., contact with the object X).

In particular, in this embodiment, since gas is introduced into the space S, the space S is set to positive pressure (i.e. , pressure higher than the pressure of the atmosphere in which the robot 1 is disposed) in a natural state. Since the space S is set to the positive pressure in the natural state in this way, it is possible to more greatly change the pressure in the space S according to the contact with the contact object X. Therefore, it is possible to more highly sensitively detect the contact with the contact object X. Contact strength with the contact object X can also be detected on the basis of the pressure change in the space S. If the contact with the contact object X is released, the pressure in the space S quickly returns to the natural state. For example, when the sealed state of the space S is collapsed by breakage of the bag body 30, an abnormal drop of the pressure in the space S can be detected. Therefore, it is possible to detect the breakage of the bag body 30 more earlier. Note that the "natural state" refers to a stationary state and a state in which the second sheet material 32 is not in contact with the contact object X.

The gas introduced into the space S is not particularly limited and may be the air. However, the gas is desirably rare gas (in particular, dried rare gas) such as nitrogen or argon. Consequently, the atmosphere in the space S is more stabilized. Fluid other than the gas such as liquid or gel may be introduced into the space S to set the space S to positive pressure.

The pressure in the space S is not particularly limited. The pressure in the space S can be set to, for example, approximately +5 kPa with respect to the pressure of the atmosphere (the atmospheric pressure) in which the robot 1 is disposed, although the pressure in the space S is different depending on the strength of the first sheet material 31 and the second sheet material 32, joining strength of the first sheet material 31 and the second sheet material 32, and the like. If the pressure in the space S is set to approximately +5 kPa, it is possible to sufficiently increase pressure detection accuracy.

The displacement restraining section 33 is provided in the space S, that is, between the first sheet material 31 and the second sheet material 32. The displacement restraining section 33 in this embodiment is configured by an elastic body. Since the displacement restraining section 33 is configured by the elastic body in this way, the configuration of the displacement restraining section 33 is simplified. It is possible to reduce a shock at the time of the contact with the contact object X. Therefore, safety of the operator serving as the contact object X is improved.

In particular, in this embodiment, the displacement restraining section 33 is configured by a soft foamed body having continuous holes represented by sponge. Since the displacement restraining section 33 is configured by the foamed body in this way, the configuration of the displacement restraining section 33 is simplified. It is possible to show high shock absorption. As such a foamed body, for example, a urethane foam material can be used. Note that the foamed body in this embodiment includes the continuous holes. However, the foamed body does not have to include the continuous holes.

The displacement restraining section 33 is formed in a sheet shape and located between the first sheet material 31 and the second sheet material 32. The lower surface (i.e. , the surface on the first sheet material 31 side) of the displacement restraining section 33 is fixed to the first sheet material 31 over the entire region of the lower surface. The upper surface (i.e., the surface on the second sheet material 32 side) of the displacement restraining section 33 is fixed to the second sheet material 32 over the entire region of the upper surface. Note that the fixing of the displacement restraining section 33 and the first and second sheet materials 31 and 32 can be performed using, for example, an adhesive. Since the displacement restraining section 33 is fixed to the first and second sheet materials 31 and 32 in this way, when the contact object X comes into contact with the second sheet material 32 as shown in Fig. 3, it is possible to restrain a swell of a portion other than a contact portion of the second sheet material 32 with the contact object X. Note that the "restrain" means that it is possible to prevent the portion other than the contact portion of the second sheet material 32 from easily swelling compared with when the displacement restraining section 33 is omitted and desirably means that it is possible to prevent the swell of the portion other than the contact portion.

Note that the thickness of the displacement restraining section 33 is not particularly limited. However, in a state in which the displacement restraining section 33 is disposed in the bag body 30, the thickness of the displacement restraining section 33 can be set to, for example, 1 cm or more and 5 cm or less. By setting the thickness of the displacement restraining section 33 to the thickness of this degree, the bag body 30 is formed sufficiently thin and is easily disposed in the arm 234.

The pressure sensor 34 is disposed in the second sheet material 32. Specifically, a pedestal 35 is provided in the second sheet material 32. A housing space SS communicating with the space S via an opening formed in the second sheet material 32 is provide in the pedestal 35. The pressure sensor 34 is provided in the housing space SS. Since the pressure sensor 34 is disposed in the second sheet material 32 in this way, it is possible to dispose the pressure sensor 34 in a place nearer from the space S. Therefore, a pressure loss decreases and a time lag until detection of a pressure change decreases. It is possible to more accurately detect the pressure in the space S.

Note that the pressure sensor 34 is not particularly limited as long as the pressure sensor 34 can detect pressure. A publicly-known pressure sensor can be applied. For example, the pressure sensor 34 can be configured to include a diaphragm that is deflectively deformed by received pressure and a detection element (e.g. , a piezoelectric resistance element disposed on the diaphragm) that detects deflection of the diaphragm.

As shown in Fig. 2, the pressure control unit 36 includes a pressurizing pump 361, a channel 362 configured to cause the pressurizing pump 361 and the inside of the space S to communicate, a valve 363 disposed halfway in the channel 362, and a control section 364 configured to control driving of the pressurizing pump 361 and the valve 363 on the basis of the pressure in the space S detected by the pressure sensor 34. The control section 364 controls the driving of the pressurizing pump 361 and the valve 363 such that the pressure in the space S maintains a predetermined value (e.g., the positive pressure of approximately the atmospheric pressure + 5 kPa explained above) in the natural state. The pressure in the space S changes according to a temperature change, an air leak over time, and the like. Therefore, by providing the pressure control unit 36, it is possible to keep the pressure in the space S in the natural state at the predetermined value. Therefore, it is possible to accurately detect a pressure change in the space S due to the contact with the contact object X.

The disposition of the pressurizing pump 361, the valve 363, and the control section 364 is not particularly limited. However, for example, the pressurizing pump 361, the valve 363, and the control section 364 can be disposed in the arm 234. Consequently, it is possible to protect the sections. Note that, for example, when the air leak over time from the space S substantially does not occur and a temperature sensor that can detect the temperature in the space S is provided, the pressurizing pump 361, the channel 362, and the valve 363 can be omitted. In this case, it is possible to detect actual pressure in the space S by correcting, on the basis of temperature information from the temperature sensor, the pressure in the space S detected by the pressure sensor 34.

An example of a change in the pressure in the space S (i.e., a detection signal of the pressure sensor 34) at the time when the contact object X comes into contact with the second sheet material 32 is shown in Fig. 4. A graph of Fig. 4 shows a pressure change at the time when the contact object X comes into contact with the second sheet material 32 at time T1 and separates from the second sheet material 32 at time T2. As shown in the figure, when the contact object X comes into contact with the second sheet material 32 at time T1, the pressure in the space S steeply rises and, when the contact with the contact object X is released at time T2, the pressure in the space S quickly returns to the natural state. The external-force detecting device 3 is configured to be capable of determining presence or absence of the contact with the contact object X on the basis of such a pressure change.

The control section 364 determines presence or absence of the contact with the contact object X from a detection result of the pressure in the space S in the pressure sensor 34. Specifically, when the pressure in the space S greatly rises as shown in Fig. 4, the control section 364 determines that the contact object X comes into contact with the second sheet material 32. When the pressure in the space S returns to the natural state as shown in Fig. 4, the control section 364 determines that the contact with the contact object X is released. When determining that the contact object X comes into contact with the second sheet material 32, the control section 364 transmits information indicating that the contact object X comes into contact with the second sheet material 32 to the robot control section 25 of the robot main body 2. When the robot control section 25 receives, from the control section 364, the information indicating that the contact object X comes into contact with the second sheet material 32, for example, the robot control section 25 quickly stops the robot main body 2. Consequently, it is possible to prevent breakage of the robot 1 and the contact obj ect X. In particular, it is possible to secure safety of the operator serving as the contact obj ect X. Conversely, when determining that the contact with the contact object X is released, the control section 364 transmits information indicating that the contact with the contact object X is released to the robot control section 25. When receiving, from the control section 364, the information indicating that the contact with the contact object X is released, for example, the robot control section 25 quickly resumes the driving of the robot main body 2. Consequently, it is possible to reduce a time loss due to the contact with the contact object X.

The external-force detecting device 3 is explained above in detail. With such a configuration, as explained above, it is possible to highly accurately detect presence or absence of the contact with the contact object X and perform safe driving of the robot 1. In particular, in this embodiment, the displacement restraining section 33 like sponge is disposed in the bag body 30 that is in contact with the contact object X. Therefore, it is possible to reduce a shock at the time of the contact with the contact object X. It is possible to further secure safety of the operator serving as the contact obj ect X. A slight time difference occurs from the contact with the contact object X until the displacement restraining section 33 is completely compressed (i.e., until the contact object X collides with the housing 234a of the hard arm 234). Therefore, time until the stop of the driving of the robot main body 2 can be slightly extended. Therefore, for example, even if moving speed of the arms 231, 232, 233, 234, 235, and 236 in normal operation is set relatively high, it is possible to safely stop the robot main body 2 at the time of the contact with the contact object X.

### Second Embodiment

A robot according to a second embodiment of the invention is explained.

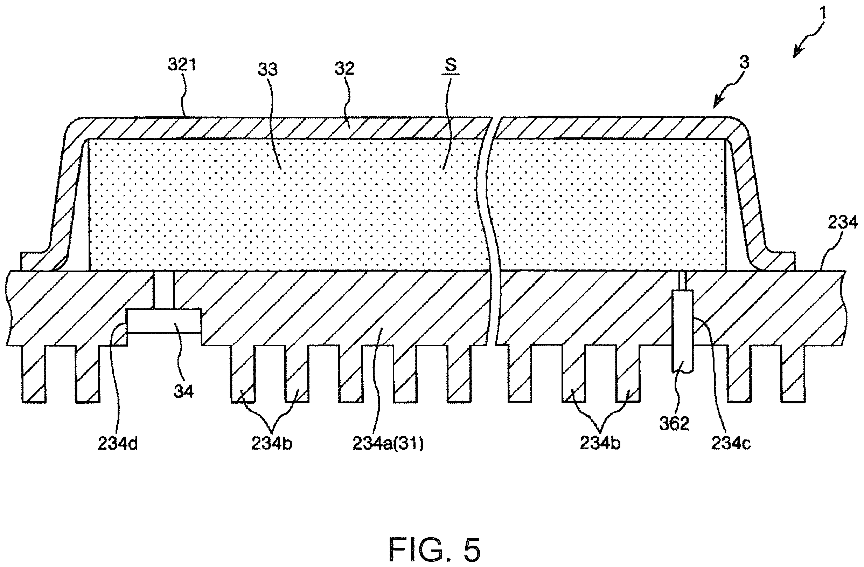

Fig. 5 is a partially enlarged sectional view showing the robot according to this embodiment.

The robot according to this embodiment is the same as the robot according to the first embodiment mainly except that the configuration of an external-force detecting device is different.

Note that, in the following explanation, concerning the robot in this embodiment, differences from the embodiment explained above are mainly explained. Explanation of the similarities is omitted. In Fig. 5, components same as the components in the embodiment explained above are denoted by the same reference numerals and signs.

As shown in Fig. 5, in the robot 1 in this embodiment, a part of the arm 234 also functions as the first sheet material 31 of the external-force detecting device 3. Specifically, the housing 234a of the arm 234 also functions as the first sheet material 31. Consequently, it is possible to simplify the apparatus configuration of the robot 1.

In particular, in this embodiment, fins 234b are provided in the housing 234a. For example, it is possible to efficiently perform heat exchange between the inside and the outside of the space S. Note that the housing 234a can be formed of, for example, various metal materials.

An opening 234c that causes the inside and the outside of the space S to communicate is formed in the housing 234a. An end portion of the channel 362 is connected to the opening 234c. An opening 234d that causes the inside and the outside of the space S to communicate is formed in the housing 234a. The pressure sensor 34 is disposed in the opening 234d. That is, the pressure sensor 34 is disposed in the housing 234a that also functions as the first sheet material 31. Since the pressure sensor 34 is disposed in the housing 234a in this way, it is possible to dispose the pressure sensor 34 in a place nearer from the space S. Therefore, a pressure loss decreases and a time lag until detection of a pressure change decreases. Therefore, it is possible to more accurately detect the pressure in the space S. Since the pressure control unit 36 and the pressure sensor 34 can be disposed in the arm 234, it is possible to protect the sections.

According to this embodiment explained above, it is possible to exhibit effect same as the effect of the first embodiment explained above.

### Third Embodiment

A robot according to a third embodiment of the invention is explained.

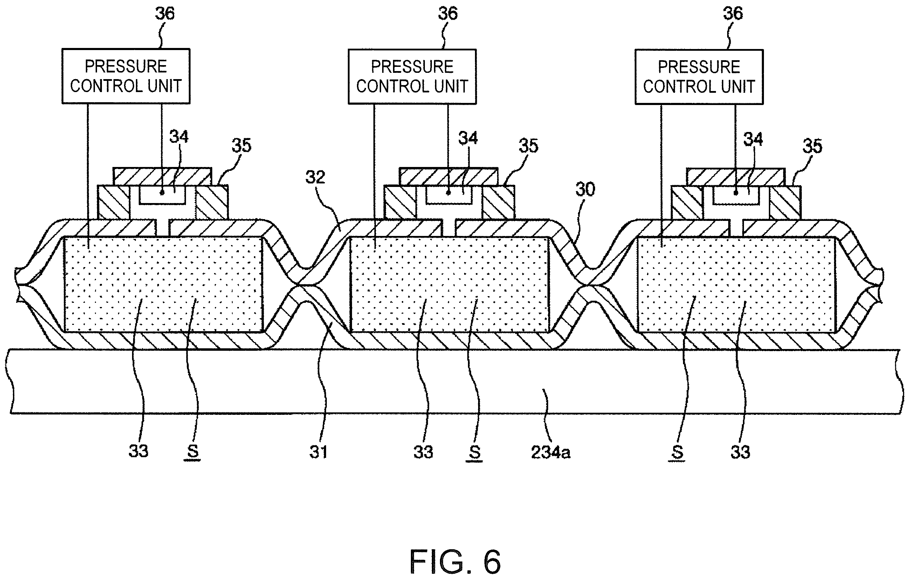

Fig. 6 is a partially enlarged sectional view showing the robot according to this embodiment.

The robot according to this embodiment is the same as the robot according to the first embodiment mainly except that the configuration of an external-force detecting device is different.

Note that, in the following explanation, concerning the robot in this embodiment, differences from the embodiments explained above are mainly explained. Explanation of the similarities is omitted. In Fig. 6, components same as the components in the embodiments explained above are denoted by the same reference numerals and signs.

As shown in Fig. 6, the space S is partitioned into a plurality of spaces S in the external-force detecting device 3 in this embodiment. The pressure sensor 34 and the pressure control unit 36 are disposed for each of the spaces S. By adopting such a configuration, the volume of one space S can be reduced. Therefore, a pressure change due to contact with the contact object X further increases.

Therefore, it is possible to more highly sensitively detect the contact with the contact object X. By specifying the space S corresponding to the pressure sensor 34 that detects the pressure change, it is possible to specify a contact part with the contact object X in a narrower range.

According to this embodiment explained above, it is possible to exhibit effect same as the effect of the first embodiment explained above. Note that, in this embodiment, the control section 364 of the pressure control unit 36 is disposed for each of the spaces S. However, a plurality of control sections 364 may be integrated as one control section. In this embodiment, the pressure sensor 34 and the pressure control unit 36 are disposed for each of the spaces S. However, for example, the plurality of spaces S may be connected in series to detect a pressure change with one pressure sensor 34 and one pressure control unit 36. The plurality of spaces S may be connected in parallel to detect a pressure change with one pressure sensor 34 and one pressure control unit 36.

### Fourth Embodiment

A robot according to a fourth embodiment of the invention is explained.

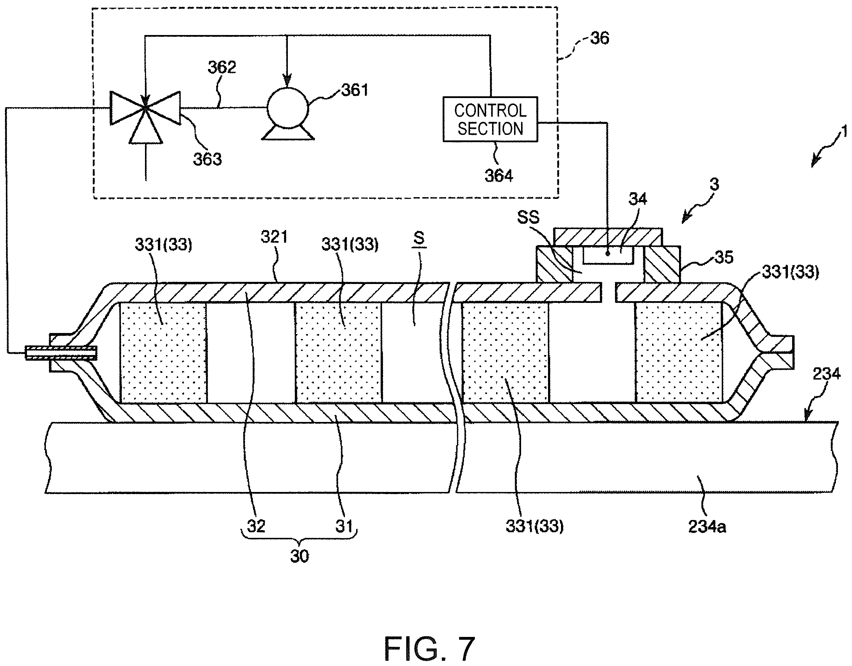

Fig. 7 is a partially enlarged sectional view showing the robot according to this embodiment.

The robot according to this embodiment is the same as the robot according to the first embodiment mainly except that the configuration of an external-force detecting device is different.

Note that, in the following explanation, concerning the robot in this embodiment, differences from the embodiments explained above are mainly explained. Explanation of the similarities is omitted. In Fig. 7, components same as the components in the embodiments explained above are denoted by the same reference numerals and signs.

As shown in Fig. 7, the displacement restraining section 33 is divided into a plurality of divided pieces 331 in the external-force detecting device 3 in this embodiment. The plurality of divided pieces 331 are disposed to be separated from one another. The lower surfaces of the divided pieces 331 are fixed to the first sheet material 31. The upper surfaces of the divided pieces 331 are fixed to the second sheet material 32. That is, the displacement restraining section 33 is fixed to the first sheet material 31 and the second sheet material 32. A plurality of fixed portions of the displacement restraining section 33 and the first sheet material 31 are provided to be separated from one another. A plurality of fixed portions of the displacement restraining section 33 and the second sheet material 32 are provided to be separated from one another. Consequently, in particular, deformation of the second sheet material 32 is less easily hindered by the displacement restraining section 33. Therefore, flexibility of the deformation of the second sheet material 32 increases. It is possible to reduce breakage of the second sheet material 32.

According to this embodiment explained above, it is possible to exhibit effect same as the effect of the first embodiment explained above. Note that, in this embodiment, the displacement restraining section 33 is divided into the plurality of divided pieces 331. However, for example, undivided one displacement restraining section 33 may be used as in the first embodiment. A plurality of fixed parts to the first and second sheet materials 31 and 32 may be disposed.

### Fifth Embodiment

A robot according to a fifth embodiment of the invention is explained.

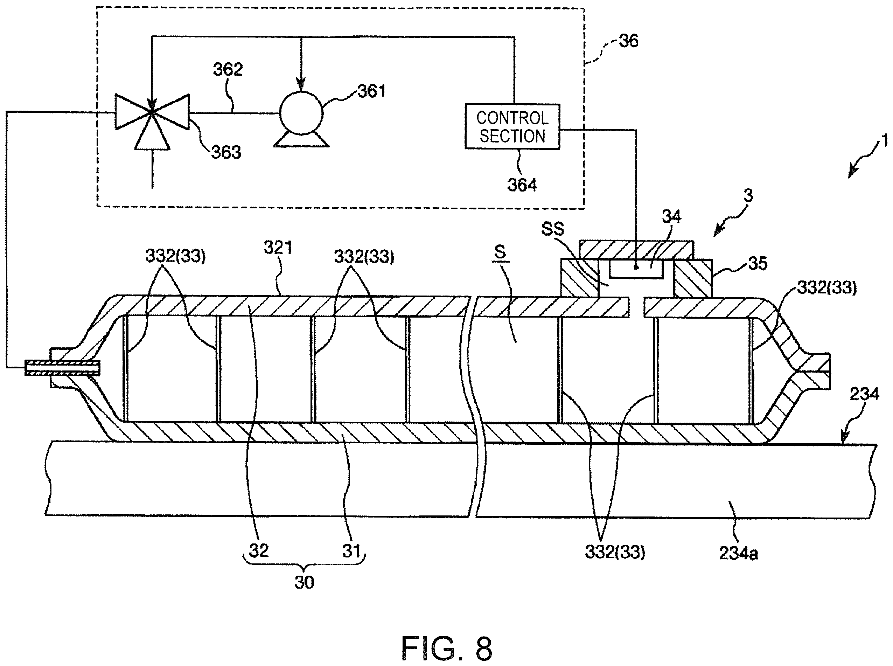

Fig. 8 is a partially enlarged sectional view showing the robot according to this embodiment.

The robot according to this embodiment is the same as the robot according to the first embodiment mainly except that the configuration of an external-force detecting device is different.

Note that, in the following explanation, concerning the robot in this embodiment, differences from the embodiments explained above are mainly explained. Explanation of the similarities is omitted. In Fig. 8, components same as the components in the embodiments explained above are denoted by the same reference numerals and signs.

As shown in Fig. 8, the displacement restraining section 33 is configured by a flexible plurality of linear bodies 332 in the external-force detecting device 3 in this embodiment. One end portions of the linear bodies 332 are fixed to the first sheet material 31. The other end portions of the linear bodies 332 are fixed to the second sheet material 32. The linear bodies 332 completely stretch to restrain displacement of the second sheet material 32 in a direction separating from the first sheet material 31.

According to this embodiment explained above, it is possible to exhibit effect same as the effect of the first embodiment explained above.

### Sixth Embodiment

A robot according to a sixth embodiment of the invention is explained.

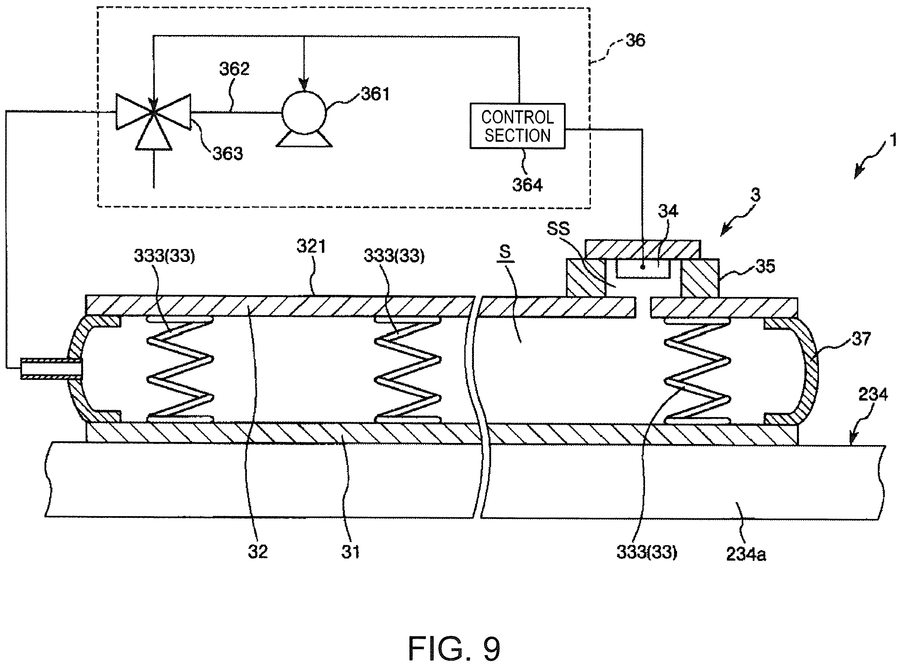

Fig. 9 is a partially enlarged sectional view showing the robot according to this embodiment.

The robot according to this embodiment is the same as the robot according to the first embodiment mainly except that the configuration of an external-force detecting device is different.

Note that, in the following explanation, concerning the robot in this embodiment, differences from the embodiments explained above are mainly explained. Explanation of the similarities is omitted. In Fig. 9, components same as the components in the embodiments explained above are denoted by the same reference numerals and signs.

As shown in Fig. 9, the external-force detecting device 3 in this embodiment includes the first sheet material 31, the second sheet material 32 disposed to be opposed to the first sheet material 31, a coupling section 37 having flexibility configured to couple outer circumferential sections of the first sheet material 31 and the second sheet material 32 and form the sealed space S between the first sheet material 31 and the second sheet material 32, the displacement restraining section 33 located between the first sheet material 31 and the second sheet material 32, the pressure sensor 34 configured to detect the pressure in the space S, and the pressure control unit 36 configured to control the pressure in the space S. In this embodiment, the first sheet material 31 and the second sheet material 32 are configured by tabular rigid members. The displacement restraining section 33 is configured by a plurality of spring members 333 functioning as elastic bodies. The spring members 333 are provided to expand and contract in the thickness direction of the space S. Since the displacement restraining section 33 is configured by the spring members 333 in this way, the configuration of the displacement restraining section 33 is simplified. It is possible to reduce a shock at the time of the contact with the contact object X. Therefore, safety of the operator serving as the contact object X is improved.

According to this embodiment explained above, it is possible to exhibit effect same as the effect of the first embodiment explained above. Note that, in the case of this embodiment, the spring members 333 functioning as the displacement restraining section 33 may be omitted. The coupling section 37 may also function as the displacement restraining section 33.

The robot and the external-force detecting device according to the invention are explained above on the basis of the embodiments shown in the figures. However, the invention is not limited to this. The components of the sections can be substituted with any components having the same functions. Any other components may be added to the invention. The embodiments may be combined as appropriate.

In the embodiment explained above, the space in the bag body is sealed. However, the space in the bag body does not have to be sealed. In this case, the space S has pressure equal to the pressure of the atmosphere.

### Seventh Embodiment

A robot according to a seventh embodiment of the invention is explained.

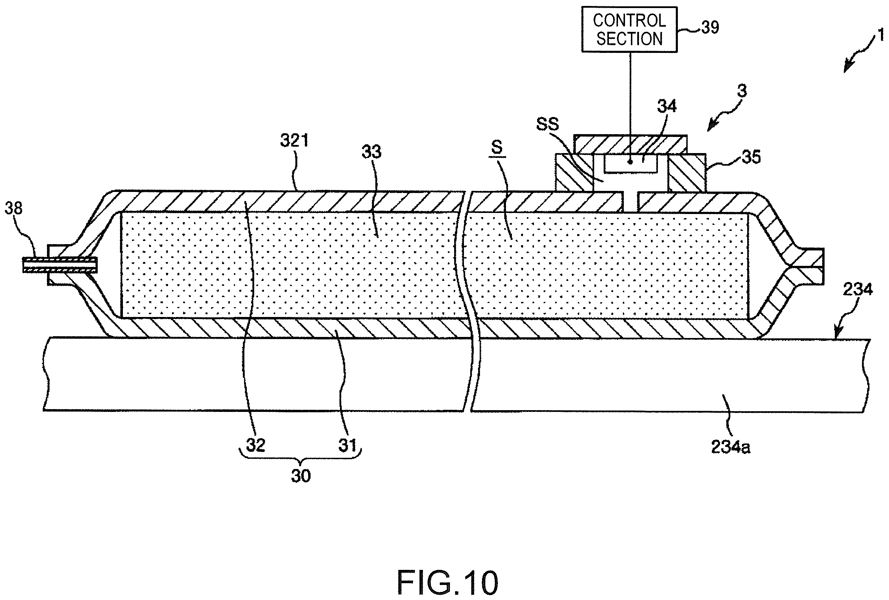

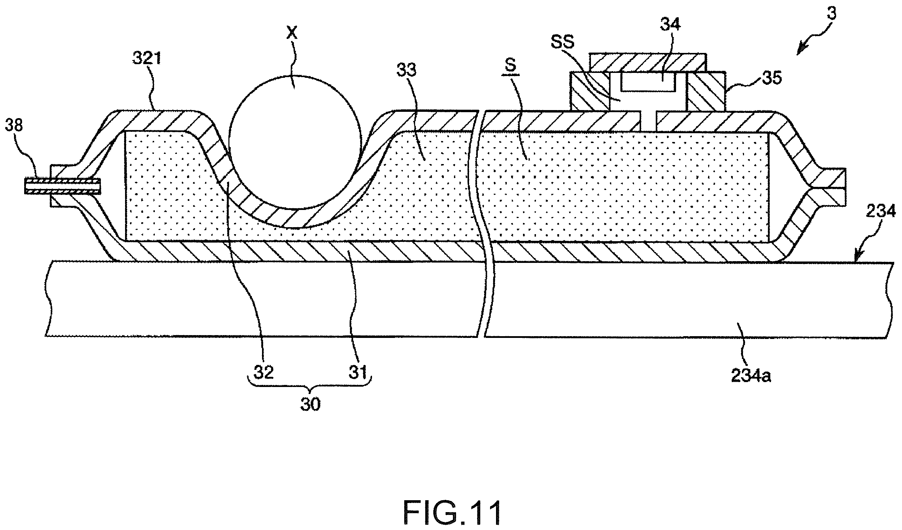

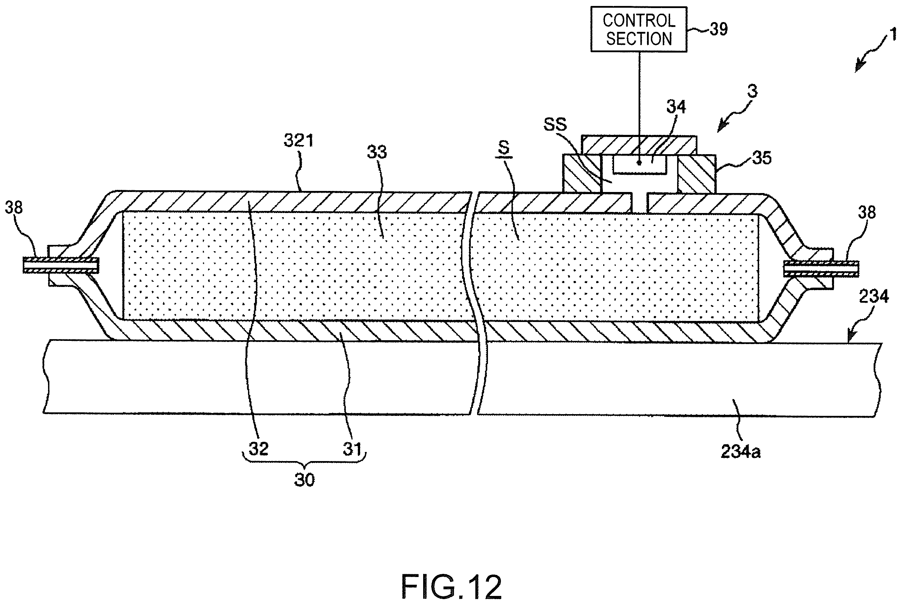

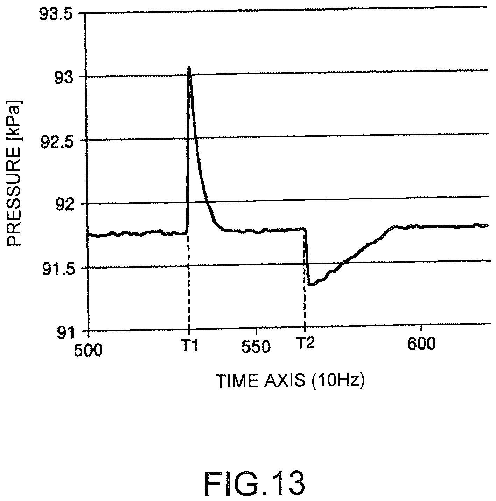

Fig. 10 is a sectional view showing an external-force detecting device included in the robot shown in Fig. 1. Fig. 11 is a sectional view showing a state in which a contact object comes into contact with the external-force detecting device shown in Fig. 10. Fig. 12 is a sectional view showing a modification of the external-force detecting device shown in Fig. 10. Fig. 13 is a graph showing an example of a detection signal of a pressure sensor included in the external-force detecting device.

As shown in Fig. 10, the external-force detecting device 3 includes the first sheet material 31 functioning as a first member disposed in the housing 234a of the arm 234, the second sheet material 32 functioning as a second member configured to form the space S, which is a space surrounded between the second sheet material 32 and the first sheet material 31, in conjunction with the first sheet material 31, the displacement restraining section 33 functioning as a third member located between the first sheet material 31 and the second sheet material 32 and configured to restrain displacement of the second sheet material 32 in a direction separating from the first sheet material 31, the pressure sensor 34 functioning as a pressure detecting section configured to detect the pressure in the space S, an opening section 38 configured to cause the inside and the outside of the space S to communicate, and a control section 39 configured to receive an output from the pressure sensor 34. With the external-force detecting device 3 and the robot 1, displacement of the second sheet material 32 in the direction separating from the first sheet material 31 can be restrained by the displacement restraining section 33. Therefore, when the contact object X (representatively, an operator) comes into contact with the second sheet material 32 (the arm 234), as shown in Fig. 11, a portion other than a contact portion of the second sheet material 32 with the contact object X less easily swells. It is possible to increase a pressure change in the space S. If the contact with the contact object X is released, the pressure in the space S can quickly return to a natural state with the elasticity of the displacement restraining section 33. Therefore, it is possible to highly sensitively detect the contact with the contact object X. It is possible to safely drive the robot 1. Note that " restrain the displacement" includes reducing a displacement amount even if the displacement is not completely suppressed.

As shown in Fig. 10, the external-force detecting device 3 includes the first sheet material 31 disposed in the housing 234a of the arm 234, the second sheet material 32 configured to form the space S between the second sheet material 32 and the first sheet material 31, the displacement restraining section 33 located between the first sheet material 31 and the second sheet material 32, the pressure sensor 34 configured to detect the pressure in the space S, the opening section 38 configured to cause the inside and the outside of the space S to communicate, and the control section 39 configured to receive an output from the pressure sensor 34. The first sheet material 31 is disposed on the surface of the housing 234a of the arm 234. The surface 321 of the second sheet material 32 is formed as a contact surface with the contact object X. That is, the second sheet material 32 is disposed on the opposite side of the arm 234 with respect to the first sheet material 31.

The space S is surrounded by the first sheet material 31 and the second sheet material 32.

The displacement restraining section 33 having elasticity is provided in the space S, that is, between the first sheet material 31 and the second sheet material 32. The displacement restraining section 33 has elasticity. Therefore, the displacement restraining section 33 functions like cushion and can reduce a shock at the time when the contact object X comes into contact with the second sheet material 32. Therefore, safety of the operator serving as the contact object X is improved. Further, after the contact with the contact body X is released, the second sheet material 32 quickly returns to the natural state with a restoring force (elasticity) of the displacement restraining section 33. Therefore, it is possible to prepare for the next contact with the contact object X.

The displacement restraining section 33 is formed in a sheet shape. The lower surface (i.e., the surface on the first sheet material 31 side) of the displacement restraining section 33 is fixed to the first sheet material 31 over the entire region of the lower surface. The upper surface (i.e. , the surface on the second sheet material 32 side) of the displacement restraining section 33 is fixed to the second sheet material 32 over the entire region of the upper surface. Note that the fixing of the displacement restraining section 33 and the first and second sheet materials 31 and 32 can be performed using, for example, an adhesive. Since the displacement restraining section 33 is fixed to the first and second sheet materials 31 and 32 in this way, when the contact object X comes into contact with the second sheet material 32 as shown in Fig. 11, it is possible to restrain a swell of a portion other than a contact portion of the second sheet material 32 with the contact object X. Therefore, it is possible to increase a pressure change in the space S at the time when the contact body X comes into contact with the second sheet material 32.

In particular, in this embodiment, the displacement restraining section 33 is configured by a foamed body including holes represented by sponge. In particular, the foamed body desirably includes continuous holes. Consequently, the displacement restraining section 33 has air permeability on the inside. The air can pass through the displacement restraining section 33.

The displacement restraining section 33 is not particularly limited as long as the displacement restraining section 33 has elasticity. The displacement restraining section 33 may be configured by, for example, a rubber member or the spring members 333 explained below.

The opening section 38 that causes the inside and the outside of the space S to communicate is provided in the bag body 30. The opening section 38 is disposed in a joined portion of the first sheet material 31 and the second sheet material 32, that is, between the first sheet material 31 and the second sheet material 32. By disposing the opening section 38, the pressure of the atmosphere (hereinafter referred to as "atmospheric pressure" as well) in which the robot 1 is disposed and the pressure in the space S are brought into a balanced state. Note that the disposition of the opening section 38 is not particularly limited. For example, the opening section 38 may be disposed to pierce through the first sheet material 31 or may be disposed to pierce through the second sheet material 32. For example, at least one of the first and second sheet materials 31 and 32 may be configured by a sheet material having air permeability. The sheet material may also function as the opening section 38.

The opening section 38 plays a role of adjusting changing speed of the pressure in the space S. The air in the space S is less easily discharged to the outside when the contact object X comes into contact with the second sheet material 32 and the volume of the space S decreases as shown in Fig. 11. Conversely, the air in the atmosphere is less easily introduced into the space S when the contact object X in contact with the second sheet material 32 separates from the second sheet material 32 (hereinafter referred to as "release of the contact") and the volume of the space S increases. Therefore, it is possible to temporarily increase the pressure in the space S at the time of the contact with the contact object X. It is possible to temporarily reduce the pressure in the space S during the release of the contact with the contact object X. Therefore, it is possible to highly sensitively detect presence or absence of the contact with the contact object X.

The width (the diameter) of the opening section 38 is not particularly limited. However, the width (the diameter) of the opening section 38 is desirably within a range of, for example, 0.1 mm or more and 2 mm or less. By setting the width (the diameter) of the opening section 38 in such a range, a flow rate per unit time of the opening section 38 becomes appropriate (not excessively large and not excessively small). That is, by setting the width (the diameter) of the opening section 38 to the upper limit value described above, it is possible to further improve the effect explained above. By setting the width (the diameter) of the opening section 38 to the lower limit value described above, at the time of the contact with the contact object X and the second sheet material 32, it is possible to reduce an excessive increase in the pressure in the space S and reduce, for example, breakage of the bag body 30.

The opening section 38 is desirably configured to be capable of changing an opening area like, for example, a variable valve (i.e., a valve capable of adjusting an opening degree). Consequently, it is possible to adjust a flow rate of the air passing through the opening section 38. Therefore, it is possible to adjust a state of a pressure change in the space S at the time of the contact with the contact object X and at the time when the contact state is released. Convenience is improved. Note that, as another configuration that can change the opening area, for example, as shown in Fig. 12, a plurality of opening sections 38 may be disposed. By changing the number of opening sections 38 closed by lids or the like, it is possible to change an opening area of the opening sections 38 as a whole.

An example of a change in the pressure in the space S (i.e., a detection signal of the pressure sensor 34) at the time is shown in Fig. 13. A graph of Fig. 13 shows a pressure change at the time when the contact object X comes into contact with the second sheet material 32 at time T1 and the contact object X separates from the second sheet material 32 at time T2. As shown in the figure, after the pressure in the space S steeply rises (i.e. , after the pressure in the space S rises to positive pressure higher than the atmospheric pressure) when the contact object X comes into contact with the second sheet material 32 at time T1, the air in the space S leaks via the opening section 38. Consequently, the pressure in the space S is brought into a balanced state with the atmospheric pressure. When the contact with the contact object X is released at time T2, the space S quickly expands with a restoring force of the displacement restraining section 33. The pressure in the space S temporarily drops (i.e., drops to negative pressure lower than the atmospheric pressure) according to the expansion of the space S. This phenomenon occurs irrespective of with which part of the surface of the second sheet material 32 the contact object X comes into contact. The external-force detecting device 3 is configured to be capable of determining presence or absence of the contact with the contact object X on the basis of such a pressure change.

The control section 39 determines presence or absence of the contact with the contact object X from a detection result of the pressure in the space S in the pressure sensor 34. Specifically, when the pressure in the space S greatly rises (rises to positive pressure) as shown in Fig. 13, the control section 39 determines that the contact object X comes into contact with the second sheet material 32. When the pressure in the space S temporarily drops (drops to negative pressure), the control section 39 determines that the contact with the contact object X is released. When determining that, the control section 39 transmits information indicating that the contact object X comes into contact with the second sheet material 32 to the robot control section 25 of the robot main body 2. When the robot control section 25 receives, from the control section 39, the information indicating that the contact object X comes into contact with the second sheet material 32, for example, the robot control section 25 quickly stops the robot main body 2. Consequently, it is possible to prevent breakage of the robot 1 and the contact object X. In particular, it is possible to secure safety of the operator serving as the contact object X. Conversely, when determining that the contact with the contact object X is released, the control section 39 transmits information indicating that the contact with the contact object X is released to the robot control section 25. When receiving, from the control section 39, the information indicating that the contact with the contact object X is released, for example, the robot control section 25 quickly resumes the driving of the robot main body 2. Consequently, it is possible to reduce a time loss due to the contact with the contact object X.

The external-force detecting device 3 is explained above in detail. With such a configuration, as explained above, it is possible to highly accurately detect presence or absence of the contact with the contact object X and perform safe driving of the robot 1. In particular, with the external-force detecting device 3, it is unnecessary to keep the pressure in the space S constant. Therefore, a pump and a valve for keeping the pressure in the space S constant do not have to be disposed. It is possible to achieve a cost reduction. When the temperature of the atmosphere changes, the air can flows in and out through the opening section 38. Therefore, the detection of the contact is less easily affected by the temperature change of the atmosphere. It is possible to highly accurately detect presence or absence of the contact at any temperature of the atmosphere.

In particular, in this embodiment, the displacement restraining section 33 having elasticity is disposed in the bag body 30 that is in contact with the contact object X. Therefore, it is possible to reduce a shock at the time of the contact with the contact object X. It is possible to further secure safety of the operator serving as the contact object X. A slight time difference occurs from the contact with the contact object X until the displacement restraining section 33 is completely compressed (i.e., until the contact object X collides with the housing 234a of the hard arm 234). Therefore, time until the stop of the driving of the robot main body 2 can be slightly extended. Therefore, for example, even if moving speed of the arms 231, 232, 233, 234, 235, and 236 in normal operation is set relatively high, it is possible to safely stop the robot main body 2 at the time of the contact with the contact object X.

### Eighth Embodiment

A robot according to an eighth embodiment of the invention is explained.

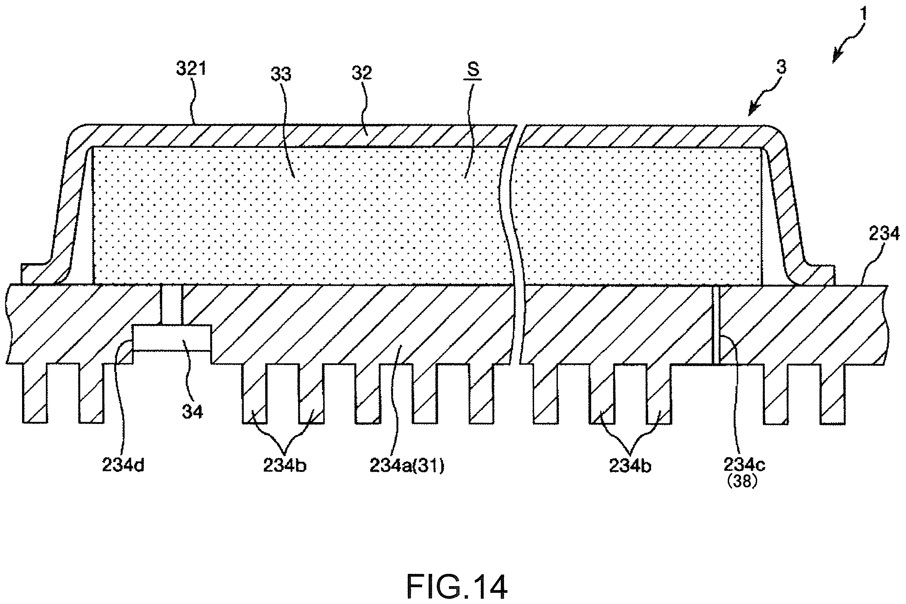

Fig. 14 is a partially enlarged sectional view showing the robot according to this embodiment.

The robot according to this embodiment is the same as the robot according to the seventh embodiment mainly except that the configuration of an external-force detecting device is different.

Note that, in the following explanation, concerning the robot in this embodiment, differences from the embodiments explained above are mainly explained. Explanation of the similarities is omitted. In Fig. 14, components same as the components in the embodiments explained above are denoted by the same reference numerals and signs.

As shown in Fig. 14, in the robot 1 in this embodiment, a part of the arm 234 also functions as the first sheet material 31 of the external-force detecting device 3. Specifically, the housing 234a of the arm 234 also functions as the first sheet material 31. Consequently, it is possible to simplify the apparatus configuration of the robot 1.

In particular, in this embodiment, the fins 234b are provided in the housing 234a. It is possible to efficiently perform heat exchange between the inside and the outside of the space S. Note that the housing 234a can be formed of, for example, various metal materials.

The opening 234c that causes the inside and the outside of the space S to communicate is formed in the housing 234a. The opening 234c also functions as the opening section 38. The opening 234d that causes the inside and the outside of the space S to communicate is formed in the housing 234a. The pressure sensor 34 is disposed in the opening 234d. That is, the pressure sensor 34 is disposed in the housing 234a that also functions as the first sheet material 31. Since the pressure sensor 34 is disposed in the housing 234a in this way, it is possible to dispose the pressure sensor 34 in a place nearer from the space S. Therefore, a pressure loss decreases and a time lag until detection of a pressure change decreases. Therefore, it is possible to more accurately detect the pressure in the space S. Since the pressure sensor 34 can be disposed in the arm 234, it is possible to protect the pressure sensor 34.

According to this embodiment explained above, it is possible to exhibit effect same as the effect of the seventh embodiment explained above.

### Ninth Embodiment

A robot according to a ninth embodiment of the invention is explained.

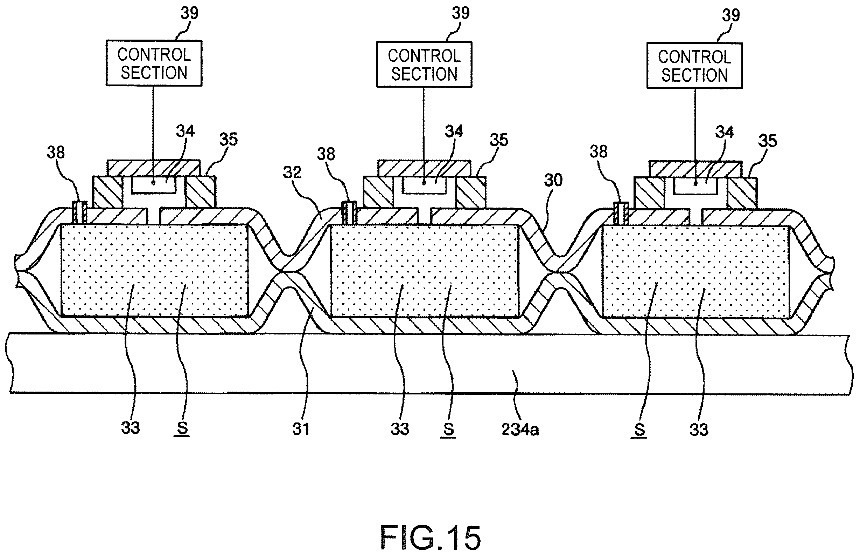

Fig. 15 is a partially enlarged sectional view showing the robot according to this embodiment.

The robot according to this embodiment is the same as the robot according to the seventh embodiment mainly except that the configuration of an external-force detecting device is different.

Note that, in the following explanation, concerning the robot in this embodiment, differences from the embodiments explained above are mainly explained. Explanation of the similarities is omitted. In Fig. 15, components same as the components in the embodiments explained above are denoted by the same reference numerals and signs.

As shown in Fig. 15, the space S is partitioned into a plurality of spaces S in the external-force detecting device 3 in this embodiment. The opening section 38 and the pressure sensor 34 are disposed for each of the spaces S. By adopting such a configuration, the volume of one space S can be reduced. A pressure change due to the contact with the contact object X further increases. Therefore, it is possible to more highly sensitively detect the contact with the contact object X. By specifying the space S corresponding to the pressure sensor 34 that detects the pressure change, it is also possible to specify a contact part with the contact object X in a narrower range.

According to this embodiment explained above, it is possible to exhibit effect same as the effect of the seventh embodiment explained above. Note that, in this embodiment, the pressure sensor 34 and the opening section 38 are disposed for each of the plurality of spaces S. However, for example, the plurality of spaces S may be connected in series and the opening section 38 communicating with any one of the spaces S may be disposed to detect a pressure change with one pressure sensor 34. The plurality of spaces S including the opening sections 38 may be connected in parallel to detect a pressure change with one pressure sensor 34.

### Tenth Embodiment

A robot according to a tenth embodiment of the invention is explained.

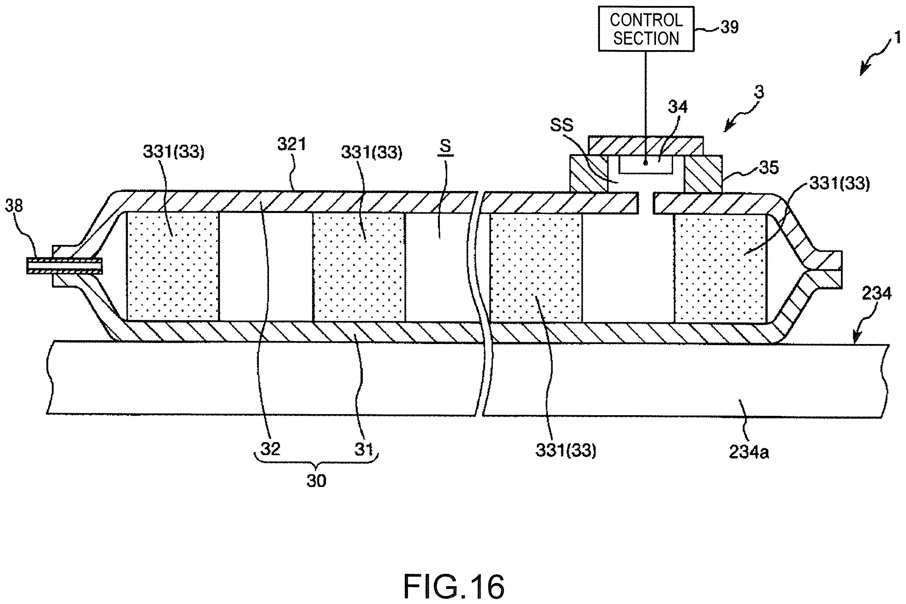

Fig. 16 is a partially enlarged sectional view showing the robot according to this embodiment.

The robot according to this embodiment is the same as the robot according to the seventh embodiment mainly except that the configuration of an external-force detecting device is different.

Note that, in the following explanation, concerning the robot in this embodiment, differences from the embodiments explained above are mainly explained. Explanation of the similarities is omitted. In Fig. 16, components same as the components in the embodiments explained above are denoted by the same reference numerals and signs.

As shown in Fig. 16, the displacement restraining section 33 is divided into a plurality of divided pieces 331 in the external-force detecting device 3 in this embodiment. The plurality of divided pieces 331 are disposed to be separated from one another. That is, a plurality of fixed portions of the displacement restraining section 33 and the second sheet material 32 are provided to be separated from one another. Consequently, compared with the configuration of the seventh embodiment explained above, deformation of the second sheet material 32 is less easily hindered by the displacement restraining section 33. It is possible to reduce breakage of the second sheet material 32. Compared with the configuration of the seventh embodiment, since the volume of the displacement restraining section 33 decreases, it is also possible to achieve a reduction in weight.

According to this embodiment explained above, it is possible to exhibit effect same as the effect of the seventh embodiment explained above. Note that, in this embodiment, the displacement restraining section 33 is divided into the plurality of divided pieces 331. However, for example, undivided one displacement restraining section 33 may be used as in the seventh embodiment. A plurality of fixed parts to the first and second sheet materials 31 and 32 may be disposed.

### Eleventh Embodiment

A robot according to an eleventh embodiment of the invention is explained.

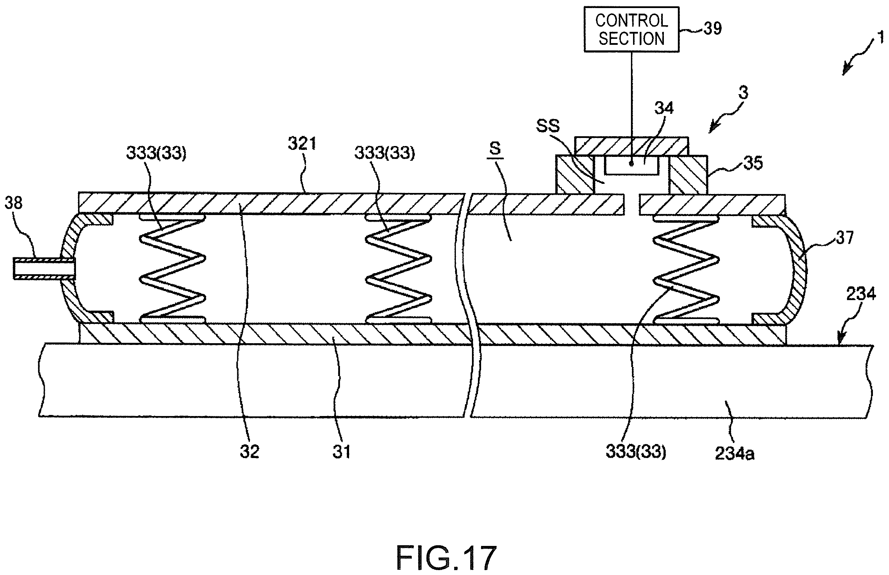

Fig. 17 is a partially enlarged sectional view showing the robot according to this embodiment.

The robot according to this embodiment is the same as the robot according to the seventh embodiment mainly except that the configuration of an external-force detecting device is different.

Note that, in the following explanation, concerning the robot in this embodiment, differences from the embodiments explained above are mainly explained. Explanation of the similarities is omitted. In Fig. 17, components same as the components in the embodiments explained above are denoted by the same reference numerals and signs.

As shown in Fig. 17, in the external-force detecting device 3 in this embodiment, the first sheet material 31 and the second sheet material 32 are respectively configured by tabular rigid members. The coupling section 37 that couples outer circumferential sections of the first and second sheet materials 31 and 32 to form the space S is provided. The coupling section 37 is desirably formed of a material having elasticity or flexibility. In this embodiment, the first sheet material 31 and the second sheet material 32 are configured by tabular rigid members. The displacement restraining section 33 is configured by the plurality of spring members 333 functioning as elastic bodies. The spring members 333 are provided to expand and contract in the thickness direction of the space S. Since the displacement restraining section 33 is configured by the spring members 333 in this way, the configuration of the displacement restraining section 33 is simplified. It is possible to reduce a shock at the time of the contact with the contact object X. Therefore, safety of the operator serving as the contact object X is improved.

According to this embodiment explained above, it is possible to exhibit effect same as the effect of the seventh embodiment explained above.

The robot and the external-force detecting device according to the invention are explained above on the basis of the embodiments shown in the figures. However, the invention is not limited to this. The components of the sections can be substituted with any components having the same functions. Any other components may be added to the invention. The embodiments may be combined as appropriate.

In the embodiments explained above, a six-axis multi-joint robot having six turning axes is used as the robot. However, the robot is not limited to this. The robot may be, for example, a double-arm robot including a body and two multi-joint arms or may be a SCARA robot (a horizontal multi-joint robot).

In the embodiments explained above, the configuration is explained in which the external-force detecting device is disposed in the robot. However, a target in which the external-force detecting device is disposed is not limited to the robot. The external-force detecting device may be disposed in, for example, a mobile body such as a motorcycle or an automobile or a living organism such as an animal (in particular, a human being) or a plant.

## Claims

1. A robot (1) comprising:
a movable section (234);
a first member (31) disposed in the movable section (234);
a second member (32) configured to form a space (S) between the second member (32) and the first member (31);
a third member (33) located between the first member (31) and the second member (32) and configured to restrain displacement of the second member (32) in a direction separating from the first member (31); and
a pressure detecting section (34) configured to detect pressure in the space (S).

2. The robot (1) according to claim 1, wherein the space (S) is surrounded by the first member (31) and the second member (32) .

3. The robot (1) according to claim 1 or 2, wherein the space (S) is sealed.

4. The robot (1) according to any one of claims 1 to 3, wherein the space (S) has positive pressure in a natural state.

5. The robot (1) according to any one of the preceding claims, wherein the space (S) is partitioned into a plurality of spaces.

6. The robot (1) according to any one of claims 1 to 5, wherein the pressure detecting section (34) is disposed in the second member (32).

7. The robot (1) according to any one of claims 1 to 5, wherein the pressure detecting section (34) is disposed in the first member (31).

8. The robot (1) according to any one of the preceding claims, wherein a part of the movable section (234) also functions as the first member (31).

9. The robot (1) according to any one of the preceding claims, wherein the third member (33) is an elastic body.

10. The robot (1) according to any one of the preceding claims, wherein the third member (33) includes a foamed body.

11. The robot (1) according to any one of the preceding claims, wherein the first member (31) is a first sheet material disposed in a housing (234a) of the movable section (234).

12. The robot (1) according to claim 11, wherein the second member (32) is a second sheet material configured to form a space (S) surrounded between the second sheet material and the first sheet material.

13. The robot (1) according to claim 12, wherein the third member (33) is a displacement restraining section located between the first sheet material and the second sheet material and configured to restrain displacement of the second sheet material in a direction separating from the first sheet material.

14. The robot (1) according to any one of the preceding claims, wherein
the third member (33) is fixed to the first member (31) and the second member (32),
a plurality of fixed portions of the third member (33) and the first member (31) are provided to be separated from one another, and
a plurality of fixed portions of the third member (33) and the second member (32) are provided to be separated from one another.

15. An external-force detecting device for a robot (1) according to any one of claims 1 to 14, the external-force detecting device comprising:
the first member (31);
the second member (32);
the third member (33); and
the pressure detecting section (34).
